# FASCICULE DE BREVET EUROPEEN

(11) **EP 3 288 153 B1**
(45) Date de publication et mention de la délivrance du brevet: **05.02.2020**
(21) Numéro de dépôt: 17187286.4
(22) Date de dépôt: 22.08.2017
(51) Int. Cl.: H02J 50/10

(54) **ALIMENTATION ELECTRIQUE DE SUBSTITUTION PAR INDUCTION ELECTRIQUE VIA UNE SONDE**
ERSATZ-STROMVERSORGUNG DURCH ELEKTRISCHE INDUKTION ÜBER EINE SONDE
ELECTRIC SUPPLY FOR SUBSTITUTION BY ELECTRIC INDUCTION VIA A PROBE

(30) Priorité: 25.08.2016 FR 1657920
(43) Date de publication de la demande: 28.02.2018
(73) Titulaire: Sagemcom Energy & Telecom SAS, 92500 Rueil-Malmaison (FR)
(72) Inventeur: REGNAULT, Laurent, 92500 RUEIL MALMAISON (FR); GRINCOURT, Christophe, 92500 RUEIL MALMAISON (FR)
(74) Mandataire: Cabinet Le Guen Maillet

(56) Documents cités:
- WO-A1-2012/084524
- GB-A- 2 291 291
- US-A- 5 734 254
- US-A1- 2014 328 562
- US-B1- 6 175 124

## Description

La présente invention concerne un système permettant d'effectuer une relève de données stockées dans une mémoire non volatile d'un premier dispositif et/ou d'écriture de données dans ladite mémoire non volatile, à partir d'un second dispositif, alors que le premier dispositif ne dispose potentiellement pas d'alimentation électrique dédiée. Plus particulièrement, la présente invention concerne la relève et/ou l'enregistrement par communication optique de telles données grâce à un dispositif portatif.

Pour permettre d'effectuer un relevé de données stockées en mémoire non volatile d'un premier dispositif, à partir d'un second dispositif, il est nécessaire d'alimenter ledit premier dispositif de manière à accéder au contenu de la mémoire non volatile et à transférer ledit contenu sur ledit second dispositif. Typiquement, ledit premier dispositif est alimenté par une pile ou une batterie, ou est connecté au secteur. De tels relevés de données concernent par exemple le comptage de consommation énergétique de bâtiments : un opérateur humain effectue une tournée dans un secteur géographique donné et passe de bâtiment en bâtiment selon ladite tournée de manière à effectuer des relevés de comptage auprès des compteurs électriques desdits bâtiments, en utilisant typiquement une sonde conforme au standard IEC 62056-21, aussi connue sous le nom de sonde FLAG. Ces compteurs électriques sont en général en fonctionnement nominal au moment où le relevé est effectué. Pour pouvoir toutefois gérer le cas où l'alimentation électrique par secteur serait inexistante (e.g. défaillante) au moment du relevé, ces compteurs électriques sont équipés d'une pile ou d'une batterie permettant d'alimenter les composants desdits compteurs électriques qui doivent l'être pour effectuer de tels relevés. Un supercondensateur peut aussi être utilisé à la place d'une pile.

Un problème posé par cette approche est qu'il faut donc que la pile, la batterie, ou le supercondensateur soit suffisamment chargé pour permettre d'effectuer le relevé. Se pose donc la difficulté de devoir remplacer cette pile ou batterie, d'assurer que le supercondensateur fonctionne correctement. Se pose aussi donc aussi indirectement la question de la durée de vie de ces sources énergétiques.

Cette problématique se rencontre aussi dans d'autres contextes de relèves de données stockées en mémoire non volatile. On notera notamment que cette problématique se rencontre aussi pour la relève de données stockées en mémoire non volatile d'un concentrateur de données (« Data Concentrator » en anglais), dans le cadre d'un réseau d'alimentation électrique de type AMM (« Automated Meter Management » en anglais).

Cette problématique se rencontre aussi dans des contextes de mise à jour de données en mémoire non volatile.

Il est connu le document US 5,734,254 A qui divulgue un système de charge pour charger une batterie du type utilisé dans un dispositif électronique portable, tel qu'un ordinateur portable, un téléphone cellulaire, etc.

Il est aussi connu le document US 6,175,124 B1 qui divulgue un circuit intégré amélioré comprenant une alimentation sans contact et un couplage de transmission de données par voie optique.

Il est aussi connu le document US 2014/328562 A1 qui divulgue une connectique électro-optique comprenant une première liaison de transmission de données et une seconde liaison d'alimentation électrique permettant un transfert d'énergie sans-fil.

Il est aussi connu le document GB 2 291 291 A qui divulgue une opération de charge dans laquelle l'énergie électrique provenant d'un chargeur est fournie sans contact direct avec une batterie d'accumulateurs dans un dispositif de communication radio.

WO 2012/084524 A1 divulgue un appareil détachable de lecture des données d'un compteur.

Il est souhaitable de pallier ces inconvénients de l'état de la technique. Il est notamment souhaitable de fournir une solution qui permette d'effectuer un relevé de données stockées dans une mémoire non volatile d'un premier dispositif et/ou d'enregistrer dans ladite mémoire non volatile, à partir d'un second dispositif, alors que le premier dispositif ne dispose potentiellement pas d'alimentation électrique dédiée. Il est plus particulièrement souhaitable de fournir une solution adaptée au relevé de données de comptage énergétique contenues dans une mémoire non volatile d'un compteur électrique. Il est aussi souhaitable de fournir une solution qui permette de continuer à utiliser, dans le domaine des compteurs électriques, une technologie de transfert par communication optique telle que décrite dans le standard IEC 62056-21.

A cet effet, l'invention concerne, selon un premier aspect, un système comportant au moins un premier dispositif et au moins un second dispositif, ainsi qu'au moins une sonde respectivement connectée à chaque second dispositif, chaque premier dispositif comportant : une source d'alimentation électrique principale et une source d'alimentation électrique de substitution adaptée pour alimenter électriquement le premier dispositif dans le cas où la source d'alimentation électrique principale est inopérante, une mémoire non volatile ; et un premier émetteur-récepteur optique configuré pour effectuer des communications optiques avec un second émetteur-récepteur optique d'une dite sonde, lorsque lesdits premier et second émetteurs-récepteurs optiques sont placés en regard l'un de l'autre, de telle sorte que le second dispositif auquel est connectée ladite sonde est apte à accéder à la mémoire non volatile dudit premier dispositif dans le cadre desdites communications optiques. De plus, chaque premier dispositif comporte en outre un premier bobinage et chaque sonde comporte un second bobinage, de sorte que le second dispositif auquel ladite sonde est connectée fournit audit premier dispositif la source d'alimentation électrique de substitution par phénomène d'induction lorsque lesdits premier et second bobinages sont placés en regard l'un de l'autre. Ainsi, il est possible d'accéder à la mémoire non volatile d'un dit premier dispositif (pour effectuer un relevé de données stockées dans sa mémoire non volatile et/ou d'y enregistrer des données), alors que le premier dispositif ne dispose potentiellement pas d'alimentation électrique dédiée. De plus, il est ainsi possible de continuer à utiliser, lorsque le premier dispositif est un compteur électrique, une technologie de transfert par communication optique telle que décrite dans le standard IEC 62056-21.

De plus, le premier bobinage de chaque premier dispositif entoure le premier émetteur-récepteur optique dudit premier dispositif, et le second bobinage de chaque sonde entoure le second émetteur-récepteur optique de ladite sonde. Ainsi, l'encombrement de chaque sonde est réduit.

De plus encore, chaque premier dispositif comporte une rondelle métallique positionnée de telle sorte que les communications optiques s'effectuent via le centre évidé de ladite rondelle métallique, et chaque sonde comporte une rondelle aimantée positionnée de telle sorte que les communications optiques s'effectuent via le centre évidé de ladite rondelle aimantée, et lorsque la rondelle métallique et la rondelle aimantée sont placées l'une contre l'autre, les premier et second bobinages et les premier et second émetteurs-récepteurs optiques sont respectivement placés en regard les uns des autres. Ainsi, la mise en place de chaque sonde est facilitée.

Selon un mode de réalisation particulier de ce premier aspect, chaque premier dispositif est un compteur électrique et les communications optiques sont relatives à des relevés de données de comptage stockées par ledit compteur électrique vis-à-vis d'une consommation électrique d'une installation électrique que ledit compteur électrique est en charge de superviser et/ou à des mises à jour de données de configuration dudit compteur électrique. Ainsi, la relève de données et/ou la mise à jour de données auprès de compteurs électriques est facilitée, et chaque dit compteur électrique peut se dispenser d'une source d'alimentation de substitution propre.

Selon un mode de réalisation particulier de ce premier aspect, chaque premier dispositif est un concentrateur de données d'un réseau d'alimentation électrique de type AMM. Ainsi, la relève de données et/ou la mise à jour de données auprès de concentrateurs de données est facilitée, et chaque dit concentrateur de données peut se dispenser d'une source d'alimentation de substitution propre.

Selon un mode de réalisation particulier de ce premier aspect, chaque sonde est munie d'une gaine contenant une première paire de fils électriques pour connecter le second émetteur-récepteur optique à une interface de communication du second dispositif, et une second paire de fils électriques pour connecter le second bobinage à un module d'alimentation électrique du second dispositif. Ainsi, l'implémentation de chaque sonde est simple.

L'invention concerne ainsi, selon un second aspect, également un dispositif, dit premier dispositif, destiné à être utilisé dans un système comportant en outre au moins un second dispositif, ainsi qu'au moins une sonde respectivement connectée à chaque second dispositif, ledit premier dispositif comportant : une source d'alimentation électrique principale et une source d'alimentation électrique de substitution adaptée pour alimenter électriquement le premier dispositif dans le cas où la source d'alimentation électrique principale est inopérante, une mémoire non volatile ; et un premier émetteur-récepteur optique configuré pour effectuer des communications optiques avec un second émetteur-récepteur optique d'une dite sonde, lorsque lesdits premier et second émetteurs-récepteurs optiques sont placés en regard l'un de l'autre, de telle sorte que le second dispositif auquel est connectée ladite sonde est apte à accéder à la mémoire non volatile dudit premier dispositif dans le cadre desdites communications optiques. De plus, le premier dispositif comporte en outre un premier bobinage, de sorte que, lorsque le premier bobinage est placé en regard d'un second bobinage dont est munie une dite sonde, le premier dispositif reçoit par phénomène d'induction la source d'alimentation électrique de substitution de la part du second dispositif auquel ladite sonde est connectée.

De plus, le premier bobinage du premier dispositif entoure le premier émetteur-récepteur optique.

De plus encore, le premier dispositif comporte une rondelle métallique positionnée de telle sorte que les communications optiques s'effectuent via le centre évidé de ladite rondelle métallique.

Selon un mode de réalisation particulier de ce second aspect, le premier dispositif est un compteur électrique et les communications optiques sont relatives à des relevés de données de comptage stockées par ledit compteur électrique vis-à-vis d'une consommation électrique d'une installation électrique que ledit compteur électrique est en charge de superviser et/ou à des mises à jour de données de configuration dudit compteur électrique.

Selon un mode de réalisation particulier de ce second aspect, le premier dispositif est un concentrateur de données d'un réseau d'alimentation électrique de type AMM.

L'invention concerne ainsi, selon un troisième aspect, également une sonde destinée à être utilisée dans un système comportant au moins un premier dispositif et au moins un second dispositif, la sonde étant destinée à être connectée à un dit second dispositif, chaque premier dispositif comportant : une source d'alimentation électrique principale et une source d'alimentation électrique de substitution adaptée pour alimenter électriquement le premier dispositif dans le cas où la source d'alimentation électrique principale est inopérante, une mémoire non volatile ; et un premier émetteur-récepteur optique configuré pour effectuer des communications optiques avec un second émetteur-récepteur optique de ladite sonde, lorsque lesdits premier et second émetteurs-récepteurs optiques sont placés en regard l'un de l'autre, de telle sorte que le second dispositif auquel est connectée ladite sonde est apte à accéder à la mémoire non volatile dudit premier dispositif dans le cadre desdites communications optiques. Plus précisément, la sonde comporte un second bobinage, de sorte que le second dispositif auquel ladite sonde est connectée fournit audit premier dispositif la source d'alimentation électrique de substitution par phénomène d'induction lorsque lesdits premier et second bobinages sont placés en regard l'un de l'autre.

De plus, le second bobinage entoure le second émetteur-récepteur optique.

De plus encore, la sonde comporte une rondelle aimantée positionnée de telle sorte que les communications optiques s'effectuent via le centre évidé de ladite rondelle aimantée.

Selon un mode de réalisation particulier de ce troisième aspect, la sonde est munie d'une gaine contenant une première paire de fils électriques pour connecter le second émetteur-récepteur optique à une interface de communication du second dispositif auquel ladite sonde est connectée, et une seconde paire de fils électriques pour connecter le second bobinage à un module d'alimentation électrique dudit second dispositif.

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :
- la Fig. 1 illustre schématiquement un système selon un mode de réalisation de la présente invention ;
- la Fig. 2A illustre schématiquement une mise en regard d'une sonde du système de la Fig. 1 avec un organe de communication optique d'un dispositif du système de la Fig. 1 dans lequel des données à relever sont stockées en mémoire non volatile ou dans lequel de nouvelles données doivent être stockées en mémoire non volatile ;
- la Fig. 2B illustre schématiquement une vue complémentaire de la sonde de la Fig. 2A ; et
- la Fig. 3 illustre schématiquement un agencement électronique de sélection d'une alimentation électrique dudit dispositif, selon un mode de réalisation particulier de la présente invention.

Pour permettre à un second dispositif d'accéder à une mémoire non volatile d'un premier dispositif alors que le premier dispositif peut être dans une situation où une source alimentation électrique principale dudit premier dispositif est inopérante, il est proposé d'équiper une sonde connectée audit second dispositif et via laquelle le second dispositif effectue des communications optiques avec le premier dispositif avec un bobinage et d'équiper aussi le premier dispositif avec un bobinage, de sorte que le second dispositif peut fournir une source d'alimentation électrique de substitution au premier dispositif par phénomène d'induction via ladite sonde.

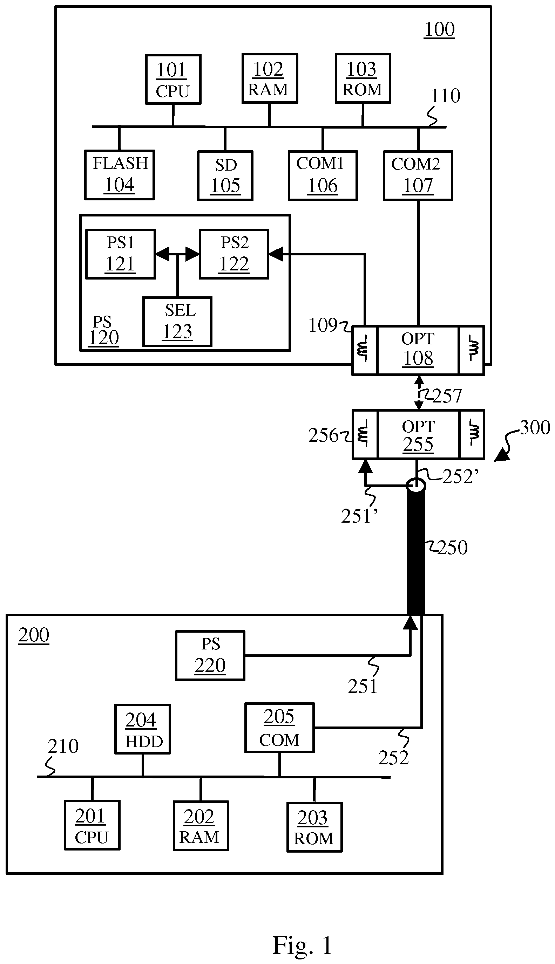

La **Fig. 1** illustre schématiquement un système selon un mode de réalisation de la présente invention. Le système de la Fig. 1 comporte un premier dispositif 100 comportant une mémoire non volatile 104, par exemple de type FLASH, dans laquelle sont stockées des données qui doivent faire l'objet d'un relevé par un opérateur humain se déplaçant à l'endroit où est situé ledit premier dispositif 100 et/ou dans laquelle doivent être nouvellement stockées des données de mise de jour.

Le premier dispositif est, selon un premier mode de réalisation préférentiel, un compteur électrique. Les données stockées en mémoire non volatile qui doivent être relevées sont alors des données de comptage de consommation énergétique d'un bâtiment, ou d'une portion de bâtiment, ou d'un ensemble de bâtiments, que ledit compteur électrique est en charge de superviser. Les données de mise à jour sont alors des données de configuration du compteur électrique.

Le premier dispositif est, selon un premier mode de réalisation préférentiel, un concentrateur de données d'un réseau d'alimentation électrique de type AMM.

Les données stockées en mémoire non volatile qui doivent être relevées sont alors des données de comptage de consommation énergétique précédemment transmises par courants porteurs en ligne PLC (« Powerline Communications » en anglais) par des compteurs électriques intelligents (« smart meters » en anglais) rattachés audit concentrateur de données. Les données de mise à jour sont alors des données de configuration du concentrateur de données, ou des données de configuration à déployer ultérieurement auprès des compteurs électriques intelligents rattachés audit concentrateur de données.

Le système de la Fig. 1 comporte un second dispositif 200 dont est muni ledit opérateur humain pour effectuer le relevé de données stockées en mémoire non volatile dudit premier dispositif 100 et/ou pour effectuer une mise à jour de données en mémoire non volatile. Ce second dispositif est typiquement portatif, pour permettre à l'opérateur humain de passer de bâtiment en bâtiment pour effectuer les relevés et/ou les mises à jour. Le second dispositif 200 est équipé d'une sonde 300 permettant d'effectuer des transmissions de données entre les premier 100 et second 200 dispositifs.

Selon un exemple d'architecture matérielle du second dispositif 200 tel que représenté sur la Fig. 1, le second dispositif 200 comporte, reliés par un bus de communication 210 : un processeur ou CPU (« Central Processing Unit » en anglais) 201 ; une mémoire vive RAM (« Random Access Memory » en anglais) 202 ; une mémoire morte ROM (« Read Only Memory » en anglais) 203 ; une unité de stockage non volatile ou un lecteur de support de stockage non volatile, tel qu'un lecteur de cartes SD (« Secure Digital » en anglais) ou un disque dur HDD (« Hard Disk Drive » en anglais) 204 ; et une interface de communication COM 205 permettant au second dispositif 200 de communiquer avec le premier dispositif 100 via la sonde 300. Les données à relever auprès du premier dispositif 100 sont stockées après réception via la sonde 300 dans l'unité de stockage non volatile (disque dur HDD 204) ou le lecteur de support de stockage non volatile, ou dans une unité de stockage non volatile externe (non représentée). Par exemple, le second dispositif 200 est équipé d'une interface USB (« Universal Serial Bus » en anglais) afin de connecter une telle unité de stockage non volatile externe, ou pour permettre ultérieurement de transférer les données que le second dispositif 200 a relevées au cours de la tournée dudit opérateur humain. Une connexion sans-fil, *e.g.* de type Wi-Fi, permettrait aussi d'y parvenir. De la même manière, les données de mise à jour à transférer au premier dispositif 100 sont préalablement stockées dans l'unité de stockage non volatile (disque dur HDD 204) ou dans le lecteur de support de stockage non volatile, ou dans une unité de stockage non volatile externe (non représentée).

Le CPU 201 est capable d'exécuter des instructions chargées dans la RAM 202 à partir de la ROM 203, d'une mémoire externe, d'un support de stockage, ou éventuellement d'un réseau de communication. Lorsque le second dispositif 200 est mis sous tension, le CPU 201 est capable de lire de la RAM 202 des instructions et de les exécuter. Ces instructions forment un programme d'ordinateur causant l'implémentation, par le CPU 201, d'algorithmes permettant d'établir des communications avec le premier dispositif 100 via la sonde 300, et de gérer ainsi des transferts de données entre les premier 100 et second 200 dispositifs, ainsi que d'effectuer d'autres traitements. A noter qu'à la place d'une implémentation sous forme logicielle par exécution d'un ensemble d'instructions par une machine programmable, telle qu'un DSP (« Digital Signal Processor » en anglais) ou un microcontrôleur, une implémentation sous forme matérielle par une machine ou un composant dédié, tel qu'un FPGA (« Field-Programmable Gâte Array » en anglais) ou un ASIC (« Application-Specific Integrated Circuit » en anglais) permet d'obtenir un résultat similaire.

Selon un exemple d'architecture matérielle du premier dispositif 100 tel que représenté sur la Fig. 1, le premier dispositif 100 comporte, reliés par un bus de communication 110 : un processeur ou CPU 101 ; une mémoire vive RAM 102 ; une mémoire morte ROM 103 ; une mémoire non volatile, tel qu'une mémoire FLASH 104, dans laquelle le premier dispositif 100 stocke des données à transférer ultérieurement au second dispositif 200 via la sonde 300 et/ou le premier dispositif 100 est amené à stocker des données transférées ultérieurement par le second dispositif 200 via la sonde 300 ; une unité de stockage non volatile ou un lecteur de support de stockage non volatile, tel qu'un lecteur de cartes SD 105 ou un disque dur HDD ; une première interface de communication COM1 106, optionnelle, permettant au premier dispositif 100 de communiquer avec d'autres dispositifs que le second dispositif 200, comme par exemple pour communiquer via des courants porteurs en ligne avec des compteurs électriques intelligents dans le cas où le premier dispositif 100 est un concentrateur de données ; et une seconde interface de communication COM2 permettant au premier dispositif 100 de communiquer avec le second dispositif 200 via la sonde 300.

Le CPU 101 est capable d'exécuter des instructions chargées dans la RAM 102 à partir de la ROM 103, d'une mémoire externe, d'un support de stockage, ou éventuellement d'un réseau de communication. Lorsque le premier dispositif 100 est mis sous tension, le CPU 101 est capable de lire de la RAM 102 des instructions et de les exécuter. Ces instructions forment un programme d'ordinateur causant l'implémentation, par le CPU 201, d'algorithmes permettant d'établir des communications avec le second dispositif 200 via la sonde 300, et de gérer ainsi des transferts de données entre les premier 100 et second 200 dispositifs, ainsi que d'effectuer d'autres traitements. A noter qu'à la place d'une implémentation sous forme logicielle par exécution d'un ensemble d'instructions par une machine programmable, telle qu'un DSP ou un microcontrôleur, une implémentation sous forme matérielle par une machine ou un composant dédié, tel qu'un FPGA ou un ASIC permet d'obtenir un résultat similaire.

Le second dispositif 200 est équipé de la sonde 300. Un ensemble de connecteurs (« plugs » en anglais) peuvent être utilisés pour permettre de déconnecter, au besoin, la sonde 300 du second dispositif 200. La sonde 300 comporte un émetteur-récepteur optique (« optical transceiver » en anglais) OPT 255 connecté par un lien 252' interne à la sonde 300 à un lien 252 interne au second dispositif 200 afin de mettre en relation l'interface de communication COM 205 du second dispositif 200 avec l'émetteur-récepteur optique OPT 255. Si la sonde 300 n'est pas montée de manière amovible par rapport au second dispositif 200, le lien 252 connecte directement l'émetteur-récepteur optique OPT 255 à l'interface de communication COM 205. La sonde 300 comporte en outre un bobinage 256 connecté par un lien 251' interne à la sonde 300 à un lien 251 interne au second dispositif 200 afin de permettre à un module d'alimentation électrique PS 220 du second dispositif 200 d'alimenter électriquement le bobinage 256. Si la sonde 300 n'est pas montée de manière amovible par rapport au second dispositif 200, le lien 251 connecte directement le bobinage 256 au module d'alimentation électrique PS 220. Le module d'alimentation électrique PS 220 est par exemple une pile, une batterie, ou un supercondensateur. Le module d'alimentation électrique PS 220 pourrait aussi être un module de récupération d'alimentation électrique externe, comme par exemple une alimentation électrique par connexion USB (e.g. en connectant le second dispositif 200 à un ordinateur qui lui fournit alors, via la connexion USB, l'alimentation électrique recherchée ). Dans un mode de réalisation préféré, le module d'alimentation électrique PS 220 est une pile ou une batterie ou un module de récupération d'alimentation électrique externe, et est aussi utilisé pour alimenter électriquement les composants du second dispositif 200.

Selon un mode de réalisation particulier, la sonde 300 comporte deux fils électriques pour assurer la connexion du bobinage 256 avec le second dispositif 200, ainsi que deux autres fils électriques pour assurer la connexion de l'émetteur-récepteur optique OPT 255 avec le second dispositif 200, ces fils électriques étant placés dans une gaine 250. Cela permet de réaliser simplement un déport, par rapport au second dispositif 200, de l'ensemble formé par l'émetteur-récepteur optique OPT 255 et le bobinage 256, et ainsi faciliter la manipulation de la sonde par l'opérateur humain.

Le premier dispositif 100 comporte en outre un émetteur-récepteur optique OPT 108 connecté à la seconde interface de communication COM2 107 du premier dispositif 100. L'émetteur-récepteur optique OPT 108 est destiné à être placé en regard de l'émetteur-récepteur optique OPT 255 de la sonde 300 pour permettre aux premier 100 et second 200 dispositifs d'échanger des données. Le premier dispositif 100 comporte en outre un bobinage 109 destiné à être placé en regard du bobinage 256 de la sonde 300 pour permettre de fournir, via la sonde 300, une source d'alimentation électrique de substitution au premier dispositif 100 lorsque des échanges de données doivent être réalisés entre les premier 100 et second 200 dispositifs.

Le premier dispositif 100 comporte en outre un module d'alimentation électrique PS 120 permettant d'alimenter énergétiquement les composants du premier dispositif 100. Le module d'alimentation électrique PS 120 comporte un premier sous-module d'alimentation électrique PS1 121 permettant de connecter le premier dispositif 100 à une source d'alimentation électrique principale, préférentiellement le secteur (« mains » en anglais). Le module d'alimentation électrique PS 120 comporte un second sous-module d'alimentation électrique PS2 122 connecté au bobinage 109 afin de mettre à disposition du premier dispositif 100 ladite source d'alimentation électrique de substitution lorsque des échanges de données doivent être réalisés entre les premier 100 et second 200 dispositifs. Le module d'alimentation électrique PS 120 comporte en outre un module de sélection SEL 123 permettant au premier dispositif 100 de définir si l'alimentation électrique des composants du premier dispositif 100 doit être réalisée par le premier sous-module d'alimentation électrique PS1 121 ou par le second sous-module d'alimentation électrique PS2 122.

Selon un premier exemple, le module de sélection SEL 123 est un actionneur (bouton) permettant à l'opérateur humain de définir si l'alimentation électrique des composants du premier dispositif 100 doit être réalisée par le premier sous-module d'alimentation électrique PS1 121 ou par le second sous-module d'alimentation électrique PS2 122. Lorsque l'actionneur est dans une première position prédéfinie, le premier dispositif 100 isole la source d'alimentation électrique de substitution et alimente électriquement les composants du premier dispositif 100 grâce au premier sous-module d'alimentation électrique PS1 121. Lorsque l'actionneur est dans une seconde position prédéfinie, le premier dispositif 100 isole la source d'alimentation électrique principale et alimente électriquement les composants du premier dispositif 100 grâce au second sous-module d'alimentation électrique PS2 122.

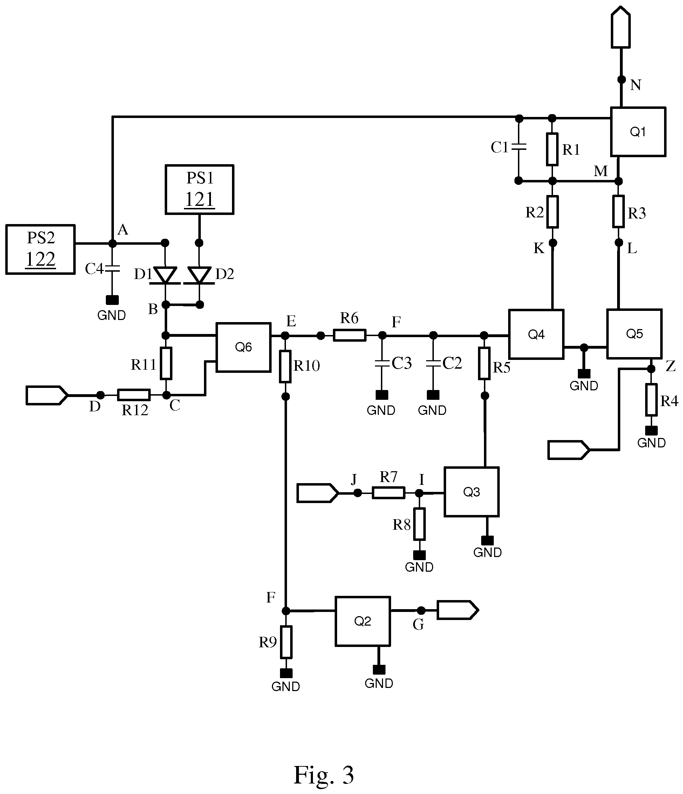

Selon un second exemple, le module de sélection SEL 123 est un agencement électronique permettant de basculer automatiquement le premier dispositif 100 sur la source d'alimentation électrique de substitution lorsque la source d'alimentation électrique principale est inopérante. Cet aspect est détaillé ci-après en relation avec la Fig. 3.

A noter que la source d'alimentation électrique de substitution permet préférentiellement de n'alimenter énergétiquement que les composants du premier dispositif 100 qui sont nécessaires aux échanges de données avec le second dispositif 200 via la sonde 300, ainsi qu'aux accès à la mémoire non volatile concernée.

Ainsi, au vu de ce qui précède, lorsque l'opérateur humain souhaite mettre en relation les premier 100 et second 200 dispositifs, l'opérateur humain applique l'embout de la sonde 300 qui comporte l'émetteur-récepteur optique OPT 255 et le bobinage 256 contre respectivement l'émetteur-récepteur optique OPT 108 et le bobinage 109 du premier dispositif 100. Les bobinages 109 et 256 sont ainsi en regard l'un de l'autre et les émetteurs-récepteurs optiques OPT 108 et 255 le sont aussi. Soit la source d'alimentation électrique principale du premier dispositif 100 est opérante, auquel cas ladite source d'alimentation électrique principale permet au premier dispositif 100 de coopérer avec le second dispositif 200 pour établir une liaison optique 257 afin de permettre des échanges de données entre les premier 100 et second 200 dispositifs. Soit la source d'alimentation électrique principale du premier dispositif 100 est inopérante, auquel cas le second dispositif 200 fournit la source d'alimentation électrique de substitution au premier dispositif 100 grâce à un phénomène d'induction généré par les bobinages 109 et 256, ce qui permet au premier dispositif 100 de coopérer avec le second dispositif 200 pour établir la liaison optique 257. Cette approche permet d'éviter, grâce au phénomène d'induction, d'avoir à effectuer une connexion électrique effective entre les premier 100 et second 200 dispositifs, puisque le transfert d'énergie depuis le bobinage 256 vers le bobinage 109 repose sur un principe de transformateur à air.

La sonde 300 est telle que le bobinage 256 entoure l'émetteur-récepteur optique OPT 255 (l'émetteur-récepteur optique OPT 255 est donc monté dans le centre évidé du bobinage 256), et donc, de la même manière, le bobinage 109 entoure l'émetteur-récepteur optique OPT 108 (l'émetteur-récepteur optique OPT 108 est donc monté dans le centre évidé du bobinage 109), de sorte que, lorsque l'opérateur humain souhaite mettre en communication les premier 100 et second 200 dispositifs, l'émetteur-récepteur optique OPT 255 puisse être placé en regard de l'émetteur-récepteur optique OPT 108 et le bobinage 256 puisse être placé en regard du bobinage 109. L'encombrement de la sonde 300 est ainsi réduit.

Préférentiellement, mis à part le bobinage 256, la sonde 300 est conforme au standard IEC 62056-21 (sonde FLAG).

A noter aussi que le système de la Fig. 1 ne comporte qu'un premier dispositif et qu'un second dispositif équipé d'une sonde. Le système de la Fig. 1 pourrait inclure plus d'un tel premier dispositif et/ou plus d'un tel second dispositif équipé d'une sonde.

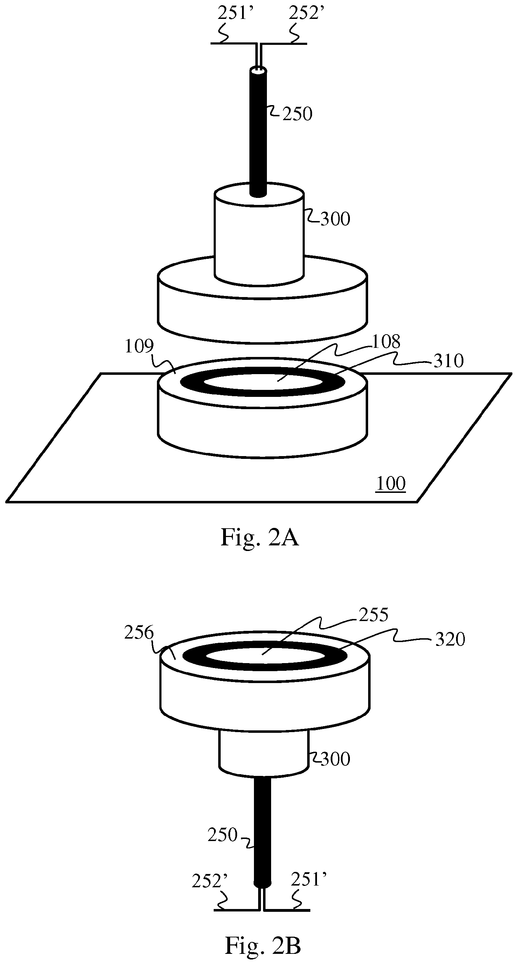

La **Fig. 2A** illustre schématiquement une mise en regard de la sonde 300 avec l'ensemble formé par l'émetteur-récepteur optique OPT 108 et le bobinage 109. Comme montré sur la Fig. 2A, une rondelle métallique 310 (ou un anneau métallique) est adjointe à l'ensemble formé par l'émetteur-récepteur optique OPT 108 et le bobinage 109. La rondelle métallique 310 est montée de telle sorte que les communications optiques impliquant l'émetteur-récepteur optique OPT 108 peuvent être effectuées via le centre évidé de ladite rondelle métallique 310. La rondelle métallique 310 est montée de telle sorte que ladite rondelle métallique 310 est placée dans le centre évidé du bobinage 109. Un montage similaire est réalisé sur la sonde 300, tel que schématiquement illustré sur la Fig. 2B, où une rondelle aimantée 320 est adjointe à l'ensemble formé par l'émetteur-récepteur optique OPT 255 et le bobinage 256. En d'autres termes, la rondelle aimantée 320 est montée de telle sorte que les communications optiques impliquant l'émetteur-récepteur optique OPT 255 peuvent être effectuées via le centre évidé de ladite rondelle aimantée 320. La rondelle aimantée 320 est montée de telle sorte que ladite rondelle aimantée 320 est placée dans le centre évidé du bobinage 256. L'agencement est tel que, lorsque la rondelle métallique 310 est placée contre la rondelle aimantée 320, cela signifie que l'émetteur-récepteur optique OPT 108 et l'émetteur-récepteur optique OPT 255 sont en regard l'un de l'autre, et que le bobinage 109 et le bobinage 256 sont aussi en regard l'un de l'autre. Cet agencement permet de faciliter la mise en place de la sonde 300 vis-à-vis du premier dispositif 100, afin de permettre le transfert de données entre les premier 100 et second 200 dispositifs.

La **Fig. 3** représente un mode de réalisation particulier du module de sélection SEL 123. Sur la Fig. 3 se retrouvent le premier sous-module d'alimentation électrique PS2 121 (source d'alimentation électrique principale du premier dispositif 100) et le second sous-module d'alimentation électrique PS2 122 (source d'alimentation électrique de substitution). La sortie du second sous-module d'alimentation électrique PS2 122 est connectée, en un point A, à un condensateur C4 aussi relié à la terre (labélisée GND sur la Fig. 3). La capacité du condensateur C4 est par exemple de 47 nF. Entre le point A et un point B est montée une diode D1, passante dans le sens A vers B. Une autre diode D2 est aussi montée entre la sortie du premier sous-module d'alimentation électrique PS2 122 et le point B. Cet assemblage des diodes D1 et D2 permet d'isoler les premier PS1 121 et second PS2 122 sous-modules d'alimentation électrique l'un par rapport à l'autre. Entre le point B et un point C est montée une résistance R11. La résistance R11 est par exemple de 220 kΩ. Entre le point C et un point D est montée une résistance R12. La résistance R12 est par exemple de 1 kΩ. Au point B est connectée la source d'un transistor MOSFET Q6 à enrichissement de type P, la grille dudit transistor MOSFET Q6 étant connectée au point C et le drain dudit transistor MOSFET Q6 étant connecté à un point E. Entre le point E et un point F est montée une résistance R10. La résistance R10 est par exemple de 10 kΩ. Entre le point F et la terre est montée une résistance R9. La résistance R10 est par exemple de 560 kΩ. Au point F est connectée la grille d'un transistor MOSFET Q2 à enrichissement de type N, la source dudit transistor MOSFET Q2 étant connectée à la terre, et le drain dudit transistor MOSFET Q2 étant connecté à un point G. Entre le point E et un point H est montée une résistance R6. La résistance R6 est par exemple de 470 kΩ. Entre le point H et la terre est monté un condensateur C3. La capacité du condensateur C3 est par exemple de 470 nF. Entre le point H et la terre est aussi monté un condensateur C2. La capacité du condensateur C2 est par exemple aussi de 470 nF. Entre le point H et le drain d'un transistor MOSFET Q3 à enrichissement de type N est montée une résistance R5. La résistance R5 est par exemple de 100 Ω. La source dudit transistor MOSFET Q3 est connectée à la terre, et la grille dudit transistor MOSFET Q3 est connectée à un point I. Entre le point I et la terre est montée une résistance R8. La résistance R8 est par exemple de 100 kΩ. Entre le point I et un point J est montée une résistance R7. La résistance R8 est par exemple de 1 kΩ. Au point H est connectée la grille d'un transistor MOSFET Q4 à enrichissement de type N, la source dudit transistor MOSFET Q4 étant connectée à la source d'un transistor MOSFET Q5 à enrichissement de type N et à la terre, et le drain dudit transistor MOSFET Q4 étant connecté à un point K. La grille dudit transistor MOSFET Q5, définissant un point Z, est connectée à la terre via une résistance R4 et le drain dudit transistor MOSFET Q5 est connecté à un point L. La résistance R4 est par exemple de 100 kΩ. Entre le point K et un point M est connectée une résistance R2. La résistance R2 est par exemple de 1 kΩ. Entre le point L et le point M est montée une résistance R3 La résistance R3 est par exemple aussi de 1 kΩ. Entre le point M et le point A est montée une résistance R1. La résistance R1 est par exemple de 10 kΩ. Entre le point M et le point A est aussi monté un condensateur C1. La capacité du condensateur C1 est par exemple de 100 pF. L'émetteur d'un transistor bipolaire Q1 de type PNP est connecté au point A, la base dudit transistor bipolaire Q1 est connectée au point M et le collecteur dudit transistor bipolaire Q1 est connecté à un point N.

Le principe général est de maintenir fermé le transistor bipolaire Q1, lorsque le second sous-module d'alimentation électrique PS2 122 est utilisé pour alimenter électriquement tout ou partie du premier dispositif 100, et d'ouvrir le transistor bipolaire Q1, lorsque le premier sous-module d'alimentation électrique PS1 121 est utilisé pour alimenter électriquement le premier dispositif 100.

Lorsque la sonde 300 est placée de telle sorte que le bobinage 256 et le bobinage 109 sont placés en regard l'un de l'autre (en s'aidant de la rondelle métallique 310 et de la rondelle aimantée 320), un signal est injecté au point D, afin d'indiquer qu'une source d'alimentation de substitution (via la sonde 300, comme précédemment décrit) est disponible. Ce signal au point D est typiquement dérivé de l'alimentation électrique fournie par le sous-module d'alimentation électrique PS2 122 pour obtenir un signal logique actif au point D lorsque la sonde 300 est connectée, et une absence de signal au point D signifie qu'aucune alimentation de substitution n'est disponible. Ce signal au point D peut être utilisé par un microcontrôleur (non représenté) du dispositif 100 pour savoir si une source d'alimentation de substitution est disponible ou pas. Un montage similaire peut être implémenté vis-à-vis de l'alimentation électrique fournie par le sous-module d'alimentation électrique PS1 121, afin de permettre au microcontrôleur de savoir si la source d'alimentation principale est disponible ou pas.

Lorsqu'au moins l'un des deux sous-modules d'alimentation électrique PS1 121 et PS2 122 est capable d'alimenter le dispositif 100, cela entraîne que le transistor bipolaire Q1 est ouvert de sorte à permettre d'alimenter électriquement le premier dispositif 100 via le point N. Ainsi, le microcontrôleur 100 est alimenté électriquement via ce point N.

Au point Z, un signal d'alimentation d'auto-maintien peut être injecté, par exemple grâce à un supercondensateur, pour permettre de maintenir le transistor bipolaire Q1 en position ouverte et alimenter électriquement le dispositif 100 lorsqu'aucun des deux sous-modules d'alimentation électrique PS1 121 et PS2 122 n'est capable d'alimenter le dispositif 100. Cela permet de supporter des microcoupures électriques sur les alimentations principale et de substitution, et aussi permettre au microcontrôleur de terminer proprement des tâches en cours avant que le dispositif 100 ne se retrouve en défaut d'alimentation. Le microcontrôleur est capable de déterminer si l'alimentation se fait par le point Z en vérifiant quel signal logique est présent au point G. En effet, au point G, un signal est généré pour indiquer qu'au moins l'un des deux sous-modules d'alimentation électrique PS1 121 et PS2 122 est capable d'alimenter le dispositif 100.

En interprétant le signal généré au point G, et en vérifiant si la source d'alimentation électrique principale est présente ou pas ou si la source d'alimentation électrique de substitution est présente ou pas au point D, le microcontrôleur est capable de déterminer par quel biais l'alimentation électrique du dispositif 100 doit se faire. Le microcontrôleur génère un signal de commande injecté au point J en conséquence. Si la source d'alimentation électrique principale est présente, le microcontrôleur génère le signal injecté au point J de sorte que ledit signal force la déconnexion de l'alimentation de substitution. Sinon, le microcontrôleur génère le signal injecté au point J de sorte que ledit signal maintienne l'alimentation de substitution.

## Revendications

1. Système comportant au moins un premier dispositif (100) et au moins un second dispositif (200), ainsi qu'au moins une sonde (300) respectivement connectée à chaque second dispositif, chaque premier dispositif comportant :
- une source d'alimentation électrique principale (121) et une source d'alimentation électrique de substitution (122) adaptée pour alimenter électriquement le premier dispositif dans le cas où la source d'alimentation électrique principale est inopérante,
- une mémoire non volatile (104) ; et
- un premier émetteur-récepteur optique (108) configuré pour effectuer des communications optiques avec un second émetteur-récepteur optique (255) d'une dite sonde, lorsque lesdits premier et second émetteurs-récepteurs optiques sont placés en regard l'un de l'autre, de telle sorte que le second dispositif auquel est connectée ladite sonde est apte à accéder à la mémoire non volatile dudit premier dispositif dans le cadre desdites communications optiques,
chaque premier dispositif comporte en outre un premier bobinage (109), chaque sonde comporte un second bobinage (256), de sorte que le second dispositif auquel ladite sonde est connectée fournit audit premier dispositif la source d'alimentation électrique de substitution par phénomène d'induction lorsque lesdits premier et second bobinages sont placés en regard l'un de l'autre,
**caractérisé en ce que** le premier bobinage (109) de chaque premier dispositif entoure le premier émetteur-récepteur optique (108) dudit premier dispositif, le second bobinage (256) de chaque sonde entoure le second émetteur-récepteur optique (255) de ladite sonde, chaque premier dispositif comporte une rondelle métallique (310) positionnée de telle sorte que les communications optiques s'effectuent via le centre évidé de ladite rondelle métallique, et **en ce que** chaque sonde comporte une rondelle aimantée (320) positionnée de telle sorte que les communications optiques s'effectuent via le centre évidé de ladite rondelle aimantée, et lorsque la rondelle métallique et la rondelle aimantée sont placées l'une contre l'autre, les premier (109) et second (256) bobinages et les premier (108) et second (255) émetteurs-récepteurs optiques sont respectivement placés en regard les uns des autres.

2. Système selon la revendication 1, **caractérisé en ce que** chaque premier dispositif est un compteur électrique et **en ce que** les communications optiques sont relatives à des relevés de données de comptage stockées par ledit compteur électrique vis-à-vis d'une consommation électrique d'une installation électrique que ledit compteur électrique est en charge de superviser et/ou à des mises à jour de données de configuration dudit compteur électrique.

3. Système selon la revendication 1, **caractérisé en ce que** chaque premier dispositif est un concentrateur de données d'un réseau d'alimentation électrique de type "Automated Meter Management" (AMM).

4. Système selon l'une quelconque des revendications 1 à 3, **caractérisé en ce que** chaque sonde est munie d'une gaine (250) contenant une première paire de fils électriques (252') pour connecter le second émetteur-récepteur optique (255) à une interface de communication (205) du second dispositif, et une second paire de fils électriques (251 ') pour connecter le second bobinage (256) à un module d'alimentation électrique (220) du second dispositif.

5. Dispositif, dit premier dispositif (100), destiné à être utilisé dans un système comportant en outre au moins un second dispositif (200), ainsi qu'au moins une sonde (300) respectivement connectée à chaque second dispositif, ledit premier dispositif comportant :
- une source d'alimentation électrique principale (121) et une source d'alimentation électrique de substitution (122) adaptée pour alimenter électriquement le premier dispositif dans le cas où la source d'alimentation électrique principale est inopérante,
- une mémoire non volatile (104) ; et
- un premier émetteur-récepteur optique (108) configuré pour effectuer des communications optiques avec un second émetteur-récepteur optique (255) d'une dite sonde, lorsque lesdits premier et second émetteurs-récepteurs optiques sont placés en regard l'un de l'autre, de telle sorte que le second dispositif auquel est connectée ladite sonde est apte à accéder à la mémoire non volatile dudit premier dispositif dans le cadre desdites communications optiques, le premier dispositif comporte en outre un premier bobinage (109), de sorte que, lorsque le premier bobinage est placé en regard d'un second bobinage (256) dont est munie une dite sonde, le premier dispositif reçoit par phénomène d'induction la source d'alimentation électrique de substitution de la part du second dispositif auquel ladite sonde est connectée, **caractérisé en ce que** le premier bobinage (109) du premier dispositif entoure le premier émetteur-récepteur optique (108), le premier dispositif comporte une rondelle métallique (310) positionnée de telle sorte que les communications optiques s'effectuent via le centre évidé de ladite rondelle métallique.

6. Dispositif selon la revendication 5, **caractérisé en ce que** le premier dispositif est un compteur électrique et **en ce que** les communications optiques sont relatives à des relevés de données de comptage stockées par ledit compteur électrique vis-à-vis d'une consommation électrique d'une installation électrique que ledit compteur électrique est en charge de superviser et/ou à des mises à jour de données de configuration dudit compteur électrique.

7. Dispositif selon la revendication 5, **caractérisé en ce que** le premier dispositif est un concentrateur de données d'un réseau d'alimentation électrique de type "Automated Meter Management" (AMM).

8. Sonde (300) destinée à être utilisée dans un système comportant au moins un premier dispositif (100) et au moins un second dispositif (200), la sonde étant destinée à être connectée à un dit second dispositif, chaque premier dispositif comportant :
- une source d'alimentation électrique principale (121) et une source d'alimentation électrique de substitution (122) adaptée pour alimenter électriquement le premier dispositif dans le cas où la source d'alimentation électrique principale est inopérante,
- une mémoire non volatile (104) ; et
- un premier émetteur-récepteur optique (108) configuré pour effectuer des communications optiques avec un second émetteur-récepteur optique (255) de ladite sonde, lorsque lesdits premier et second émetteurs-récepteurs optiques sont placés en regard l'un de l'autre, de telle sorte que le second dispositif auquel est connectée ladite sonde est apte à accéder à la mémoire non volatile dudit premier dispositif dans le cadre desdites communications optiques,
la sonde comporte en outre un second bobinage (256), de sorte que le second dispositif auquel ladite sonde est connectée fournit audit premier dispositif la source d'alimentation électrique de substitution par phénomène d'induction lorsque lesdits premier et second bobinages sont placés en regard l'un de l'autre, **caractérisée en ce que** le second bobinage (256) entoure le second émetteur-récepteur optique (255) et la sonde comporte une rondelle aimantée (320) positionnée de telle sorte que les communications optiques s'effectuent via le centre évidé de ladite rondelle aimantée.

9. Sonde selon la revendication 8, **caractérisée en ce que** la sonde est munie d'une gaine (250) contenant une première paire de fils électriques (252') pour connecter le second émetteur-récepteur optique à une interface de communication (205) du second dispositif auquel ladite sonde est connectée, et une seconde paire de fils électriques (251') pour connecter le second bobinage à un module d'alimentation électrique dudit second dispositif.

## Patentansprüche

1. System, das mindestens eine erste Vorrichtung (100) und mindestens eine zweite Vorrichtung (200) sowie mindestens eine Sonde (300), die jeweils mit jeder zweiten Vorrichtung verbunden ist, umfasst, wobei jede erste Vorrichtung umfasst:
- eine Hauptstromversorgungsquelle (121) und eine Ersatzstromversorgungsquelle (122), die geeignet ist, die erste Vorrichtung in dem Fall mit Strom zu versorgen, in dem die Hauptstromversorgungsquelle funktionsunfähig ist,
- einen nichtflüchtigen Speicher (104) und
- einen ersten optischen Sender/Empfänger (108), der dazu ausgestaltet ist, optische Kommunikationen mit einem zweiten optischen Sender/Empfänger (255) einer solchen Sonde durchzuführen, wenn der erste und der zweite optische Sender/Empfänger einander gegenüber angeordnet sind, so dass die zweite Vorrichtung, mit der die Sonde verbunden ist, geeignet ist, auf den nichtflüchtigen Speicher der ersten Vorrichtung im Rahmen der optischen Kommunikationen zuzugreifen,
wobei jede erste Vorrichtung ferner eine erste Wicklung (109) umfasst, wobei jede Sonde eine zweite Wicklung (256) umfasst, so dass die zweite Vorrichtung, mit der die Sonde verbunden ist, der ersten Vorrichtung die Ersatzstromversorgungsquelle per Induktionsphänomen bereitstellt, wenn die erste und die zweite Wicklung einander gegenüber angeordnet sind,
**dadurch gekennzeichnet, dass** die erste Wicklung (109) jeder ersten Vorrichtung den ersten optischen Sender/Empfänger (108) der ersten Vorrichtung umgibt, die zweite Wicklung (256) jeder Sonde den zweiten optischen Sender/Empfänger (255) der Sonde umgibt, jede erste Vorrichtung eine Metallscheibe (310) umfasst, die so positioniert ist, dass die optischen Kommunikationen über das ausgesparte Zentrum der Metallscheibe erfolgen, und dadurch, dass jede Sonde eine magnetische Scheibe (320) umfasst, die so positioniert ist, dass die optischen Kommunikationen über das ausgesparte Zentrum der magnetischen Scheibe erfolgen, und, wenn die Metallscheibe und die magnetische Scheibe einander gegenüber angeordnet sind, die erste (109) und die zweite (256) Wicklung und der erste (108) und der zweite (255) optische Sender/Empfänger jeweils einander gegenüber angeordnet sind.

2. System nach Anspruch 1, **dadurch gekennzeichnet, dass** jede erste Vorrichtung ein Stromzähler ist und dass die optischen Kommunikationen das Auslesen von Zählerdaten, die von dem Stromzähler für einen Stromverbrauch einer elektrischen Anlage gespeichert werden, für deren Überwachung der Stromzähler zuständig ist, und/oder Aktualisierungen von Konfigurationsdaten des Stromzählers betreffen.

3. System nach Anspruch 1, **dadurch gekennzeichnet, dass** jede erste Vorrichtung ein Datenkonzentrator eines Stromversorgungsnetzes vom Typ "Automated Meter Management" (AMM) ist.

4. System nach einem der Ansprüche 1 bis 3, **dadurch gekennzeichnet, dass** jede Sonde mit einer Ummantelung (250) versehen ist, die ein erstes Paar elektrische Adern (252') zum Verbinden des zweiten optischen Senders/Empfängers (255) mit einer Kommunikationsschnittstelle (205) der zweiten Vorrichtung und ein zweites Paar elektrische Adern (251') zum Verbinden der zweiten Wicklung (256) mit einem Stromversorgungsmodul (220) der zweiten Vorrichtung beinhaltet.

5. Vorrichtung, erste Vorrichtung (100) genannt, die dazu bestimmt ist, in einem System verwendet zu werden, das ferner mindestens eine zweite Vorrichtung (200) sowie mindestens eine Sonde (300), die jeweils mit jeder zweiten Vorrichtung verbunden ist, umfasst, wobei die erste Vorrichtung umfasst:
- eine Hauptstromversorgungsquelle (121) und eine Ersatzstromversorgungsquelle (122), die geeignet ist, die erste Vorrichtung in dem Fall mit Strom zu versorgen, in dem die Hauptstromversorgungsquelle funktionsunfähig ist,
- einen nichtflüchtigen Speicher (104) und
- einen ersten optischen Sender/Empfänger (108), der dazu ausgestaltet ist, optische Kommunikationen mit einem zweiten optischen Sender/Empfänger (255) einer solchen Sonde durchzuführen, wenn der erste und der zweite optische Sender/Empfänger einander gegenüber angeordnet sind, so dass die zweite Vorrichtung, mit der die Sonde verbunden ist, geeignet ist, auf den nichtflüchtigen Speicher der ersten Vorrichtung im Rahmen der optischen Kommunikationen zuzugreifen,
wobei die erste Vorrichtung ferner eine erste Wicklung (109) umfasst, so dass, wenn die erste Wicklung gegenüber einer zweiten Wicklung (256) angeordnet ist, mit der eine solche Sonde versehen ist, die erste Vorrichtung per Induktionsphänomen die Ersatzstromversorgungsquelle von der zweiten Vorrichtung empfängt, mit der die Sonde verbunden ist, **dadurch gekennzeichnet, dass** die erste Wicklung (109) der ersten Vorrichtung den ersten optischen Sender/Empfänger (108) umgibt, die erste Vorrichtung eine Metallscheibe (310) umfasst, die so positioniert ist, dass die optischen Kommunikationen über das ausgesparte Zentrum der Metallscheibe erfolgen.

6. Vorrichtung nach Anspruch 5, **dadurch gekennzeichnet, dass** die erste Vorrichtung ein Stromzähler ist und dass die optischen Kommunikationen das Auslesen von Zählerdaten, die von dem Stromzähler für einen Stromverbrauch einer elektrischen Anlage gespeichert werden, für deren Überwachung der Stromzähler zuständig ist, und/oder Aktualisierungen von Konfigurationsdaten des Stromzählers betreffen.

7. Vorrichtung nach Anspruch 5, **dadurch gekennzeichnet, dass** die erste Vorrichtung ein Datenkonzentrator eines Stromversorgungsnetzes vom Typ "Automated Meter Management" (AMM) ist.

8. Sonde (300), die dazu bestimmt ist, in einem System verwendet zu werden, das mindestens eine erste Vorrichtung (100) und mindestens eine zweite Vorrichtung (200) umfasst, wobei die Sonde dazu bestimmt ist, mit einer solchen zweiten Vorrichtung verbunden zu werden, wobei jede erste Vorrichtung umfasst:
- eine Hauptstromversorgungsquelle (121) und eine Ersatzstromversorgungsquelle (122), die geeignet ist, die erste Vorrichtung in dem Fall mit Strom zu versorgen, in dem die Hauptstromversorgungsquelle funktionsunfähig ist,
- einen nichtflüchtigen Speicher (104) und
- einen ersten optischen Sender/Empfänger (108), der dazu ausgestaltet ist, optische Kommunikationen mit einem zweiten optischen Sender/Empfänger (255) der Sonde durchzuführen, wenn der erste und der zweite optische Sender/Empfänger einander gegenüber angeordnet sind, so dass die zweite Vorrichtung, mit der die Sonde verbunden ist, geeignet ist, auf den nichtflüchtigen Speicher der ersten Vorrichtung im Rahmen der optischen Kommunikationen zuzugreifen,
wobei die Sonde ferner eine zweite Wicklung (256) umfasst, so dass die zweite Vorrichtung, mit der die Sonde verbunden ist, der ersten Vorrichtung die Ersatzstromversorgungsquelle per Induktionsphänomen bereitstellt, wenn die erste und die zweite Wicklung einander gegenüber angeordnet sind, **dadurch gekennzeichnet, dass** die zweite Wicklung (256) den zweiten optischen Sender/Empfänger (255) umgibt und die Sonde eine magnetische Scheibe (320) umfasst, die so positioniert ist, dass die optischen Kommunikationen über das ausgesparte Zentrum der magnetisierten Scheibe erfolgen.

9. Sonde nach Anspruch 8, **dadurch gekennzeichnet, dass** die Sonde mit einer Ummantelung (250) versehen ist, die ein erstes Paar elektrische Adern (252') zum Verbinden des zweiten optischen Senders/Empfängers mit einer Kommunikationsschnittstelle (205) der zweiten Vorrichtung, mit der die Sonde verbunden ist, und ein zweites Paar elektrische Adern (251') zum Verbinden der zweiten Wicklung mit einem Stromversorgungsmodul der zweiten Vorrichtung beinhaltet.

## Claims

1. System comprising at least one first device (100) and at least one second device (200), as well as at least one probe (300) which is connected respectively to each second device, each first device comprising:
- a main electrical power supply source (121) and a substitute electrical power supply source (122) which is adapted to supply electrical power to the first device in the case where the main electrical power supply source is inoperative,
- a nonvolatile memory (104); and
- a first optical emitter-receiver (108) configured to perform optical communications with a second optical emitter-receiver (255) of a said probe, when the said first and second optical emitter-receivers are placed facing one another, in such a way that the second device to which the said probe is connected is able to access the nonvolatile memory of the said first device within the framework of the said optical communications,
each first device furthermore comprising a first coil (109) and each probe comprising a second coil (256), so that the second device to which the said probe is connected provides the substitute electrical power supply source to the said first device by means of induction when the said first and second coils are placed facing one another,
**characterized in that** the first coil (109) of each first device surrounds the first optical emitter-receiver (108) of the said first device, the second coil (256) of each probe surrounds the second optical emitter-receiver (255) of the said probe, each first device comprises a metallic washer (310) positioned in such a way that the optical communications are performed via the hollowed-out centre of the said metallic washer, and **in that** each probe comprises a magnetized washer (320) positioned in such a way that the optical communications are performed via the hollowed-out centre of the said magnetized washer, and when the metallic washer and the magnetized washer are placed one against the other, the first (109) and second (256) coils and the first (108) and second (255) optical emitter-receivers are respectively placed facing one another.

2. System according to Claim 1, **characterized in that** each first device is an electric meter and **in that** the optical communications relate to readouts of metering data stored by the said electric meter in relation to electrical consumption of an electrical installation that the said electric meter is in charge of supervising and/or to updates of configuration data of the said electric meter.

3. System according to Claim 1, **characterized in that** each first device is a data concentrator of an electrical power supply network of "Automated Meter Management" (AMM) type.

4. System according to any one of Claims 1 to 3, **characterized in that** each probe is furnished with a sheath (250) containing a first pair of electrical wires (252') so as to connect the second optical emitter-receiver (255) to a communication interface (205) of the second device, and a second pair of electrical wires (251') so as to connect the second coil (256) to an electrical power supply module (220) of the second device.

5. Device, termed first device (100), intended to be used in a system furthermore comprising at least one second device (200), as well as at least one probe (300) which is connected respectively to each second device, the said first device comprising:
- a main electrical power supply source (121) and a substitute electrical power supply source (122) which is adapted to supply electrical power to the first device in the case where the main electrical power supply source is inoperative,
- a nonvolatile memory (104); and
- a first optical emitter-receiver (108) configured to perform optical communications with a second optical emitter-receiver (255) of a said probe, when the said first and second optical emitter-receivers are placed facing one another, in such a way that the second device to which the said probe is connected is able to access the nonvolatile memory of the said first device within the framework of the said optical communications,
the first device furthermore comprising a first coil (109), so that, when the first coil is placed facing a second coil (256) with which a said probe is furnished, the first device receives by means of induction the substitute electrical power supply source on the part of the second device to which the said probe is connected, **characterized in that** the first coil (109) of the first device surrounds the first optical emitter-receiver (108), the first device comprises a metallic washer (310) positioned in such a way that the optical communications are performed via the hollowed-out centre of the said metallic washer.

6. Device according to Claim 5, **characterized in that** the first device is an electric meter and **in that** the optical communications relate to readouts of metering data stored by the said electric meter in relation to electrical consumption of an electrical installation that the said electric meter is in charge of supervising and/or to updates of configuration data of the said electric meter.

7. Device according to Claim 5, **characterized in that** the first device is a data concentrator of an electrical power supply network of "Automated Meter Management" (AMM) type.

8. Probe (300) intended to be used in a system comprising at least one first device (100) and at least one second device (200), the probe being intended to be connected to a said second device, each first device comprising:
- a main electrical power supply source (121) and a substitute electrical power supply source (122) which is adapted to supply electrical power to the first device in the case where the main electrical power supply source is inoperative,
- a nonvolatile memory (104); and
- a first optical emitter-receiver (108) configured to perform optical communications with a second optical emitter-receiver (255) of the said probe, when the said first and second optical emitter-receivers are placed facing one another, in such a way that the second device to which the said probe is connected is able to access the nonvolatile memory of the said first device within the framework of the said optical communications,
the probe furthermore comprising a second coil (256), so that the second device to which the said probe is connected provides the substitute electrical power supply source to the said first device by means of induction when the said first and second coils are placed facing one another, **characterized in that** the second coil (256) surrounds the second optical emitter-receiver (255) and the probe comprises a magnetized washer (320) positioned in such a way that the optical communications are performed via the hollowed-out centre of the said magnetized washer.

9. Probe according to Claim 8, **characterized in that** the probe is furnished with a sheath (250) containing a first pair of electrical wires (252') so as to connect the second optical emitter-receiver to a communication interface (205) of the second device to which the said probe is connected, and a second pair of electrical wires (251') so as to connect the second coil to an electrical power supply module of the said second device.
